# Europäisches Patentamt
# European Patent Office
# Office européen des brevets

(11) Numéro de publication: **0 148 039**
**B1**

(12) # FASCICULE DE BREVET EUROPÉEN

(45) Date de publication du fascicule du brevet:
16.03.88

(51) Int. Cl.⁴: **F 16 B 39/04,** F 16 B 41/00

(21) Numéro de dépôt: **84402159.2**

(22) Date de dépôt: **26.10.84**

(54) Dispositif de fixation de deux pièces par vis imperdable et procédé de fixation correspondant.

(30) Priorité: **28.10.83 FR 8317279**

(43) Date de publication de la demande:
**10.07.85 Bulletin 85/28**

(45) Mention de la délivrance du brevet:
**16.03.88 Bulletin 88/11**

(84) Etats contractants désignés:
**BE DE GB SE**

(56) Documents cité:
**EP-A-0 071 536**
**FR-A-1 283 372**
**FR-A-1 478 075**
**US-A-2 800 247**

(73) Titulaire: **FRAMATOME ET CIE., Tour Fiat 1, Place de la Coupole, F-92400 Courbevoie (FR)**

(72) Inventeur: **Crespin, Gérard, 1 rue Mozart, F-69100 Villeurbanne (FR)**
Inventeur: **Coussau, Jean, 1 rue Gossec, F-75012 Paris (FR)**

(74) Mandataire: **Lavoix, Jean, c/o Cabinet Lavoix 2, Place D'Estienne D'Orves, F-75441 Paris Cedex 09 (FR)**

LIBER, STOCKHOLM 1988

## Description

L'invention concerne un dispositif de fixation irréversible de deux cloisons du coeur d'un réacteur nucléaire par vis imperdable et le procédé de fixation correspondant.

Dans les réacteurs nucléaires à eau sous pression, le coeur est constitué par un ensemble d'assemblages combustibles prismatiques disposés verticalement et côte à côte et généralemant entourés par un cloisonnement périphérique qui épouse la forme extérieure du coeur. Ce cloisonnement permet en particulier de maintenir les assemblages du coeur et de canaliser l'eau sous pression vers la base du coeur, avant la traversée de celui-ci de bas en haut. Le cloisonnement du coeur d'un réacteur nucléaire à eau sous pression comprend généralement un ensemble de plaques verticales assemblées à angle droit et des dispositifs de maintien constitués par des plaques horizontales découpées suivant la forme de la section du coeur et intercalées entre l'ensemble des plaques verticales du cloisonnement et la virole de coeur.

Entre les plaques verticales constituant la paroi du cloisonnement il peut apparaître, pendant le fonctionnement du réacteur, des interstices si bien que l'eau sous pression peut passer sous forme de jets, de l'espace situé entre la virole de coeur et le cloisonnement dans le volume occupé par le coeur et limité par le cloisonnement. En effet, il existe une différence de pression de l'eau de refroidissement entre l'extérieur et l'intérieur du coeur, venant de la perte de charge l'intérieur des assemblages constituant le coeur. Les jets sous pression dirigés depuis l'extérieur jusqu'à l'intérieur du coeur provoquent des vibrations des crayons des assemblages périphériques du coeur du réacteur, tout à fait dommageables pour la tenue en service de ces assemblages, les détériorations peuvent même aller jusqu'à une rupture de crayons combustibles.

On a proposé dans le document FR-A-2 510 800 de la société FRAMATOME et CIE un procédé et un dispositif pour éliminer les espaces de fuite entre les cloisons entourant le coeur d'un réacteur nucléaire à eau sous pression.

Ce procédé consiste à solidariser les cloisons deux à deux par un ensemble de vis traversantes et s'appuyant sur l'une des cloisons et vissées à l'intérieur d'un trou taraudé pratiqué dans l'autre cloison.

Il est d'une grande importance que ces vis soient réalisées sous forme de vis imperdables qui ne soient pas susceptibles de se détacher sous l'effet des vibrations pendant le fonctionnement du réacteur et d'être entraînées par l'eau sous pression de refroidissement.

On connait des dispositifs de freinage de vis par rondelles ou par clavetages mais ces dispositifs connus n'apportent pas une sécurité absolue et sont difficiles à mettre en oeuvre dans le cas d'une vis introduite à l'intérieur des cloisons du coeur d'un réacteur nucléaire.

On connait également un dispositif de fixation à filets déformés décrit dans le document FR-A-1 478 075 où le déplacement d'une bille à l'intérieur d'un alésage prévu dans la vis permet la déformation de la partie filetée de cette vis dans une direction radiale. Cette déformation dissymétrique de vis permet de réaliser un blocage en rotation de celle-ci à l'intérieur d'un trou taraudé dans laquelle elle ast angagée. Cependant un tel dispositif n'apporta pas une sécurité absolue dans la cas des cloisons d'un réacteur nucléaire, puisqu'en cas de rupture de la vis, la partie de celle-ci comportant la tête peut sa détacher de la cloison. Cette rupture peut être provoquée par les sollicitations mécaniques ou thermiques dans la réacteur nucléaire ou par les conditions d'irradiation. Le fait de déformer le filetage de la vis peut en outre diminuer sa résistance mécanique.

On a aussi proposé (US-A-3 390 712) un dispositif de blocage d'une vis par des éléments mobiles dans la direction radiale dans des logements traversant la partie filetée de la vis et communiquant avec un alésage central prévu sur toute la longueur de la vis. Une tige de blocage montée coulissante dans l'alésage central de la vis permet de déplacer les éléments mobiles pour les mettre en position de blocage lorsque la vis est en place dans un trou taraudé. Les éléments de blocage qui comportent des portions de filets d'un pas correspondant à celui du taraudage dans lequel est engagée la vis doivent être en coïncidence exacte avec les filets du taraudage pour venir en position de blocage par déplacement de la tige. Cette coïncidence exacte est difficile sinon impossible à réaliser dans le cas de vis de fixation de cloisons d'un réacteur nucléaire à eau sous pression. D'autre part, la tige de blocage n'est pas fixée sur la vis de façon à interdire toute possibilité de déplacement et donc de déblocage.

Le but de l'invention est donc de proposer un dispositif de fixation irréversible de deux cloisons du coeur d'un réacteur nucléaire par vis imperdable comportant :

- une vis engagée dans un trou taraudé sur une partie de sa longueur, usiné dans l'une au moins des deux cloisons, la vis présentant sur toute sa longueur et suivant son axe un alésage communiquant avec au moins un trou de direction radiale débouchant sur la surface latérale externe de la vis dans sa partie filetée,

- et un ensemble de blocage de la vis dans le trou taraudé constitué par au moins un élément mobile dans le trou radial et une tige de manoeuvre engagée pratiquement sans jeu dans l'alésage comportant une tête et une partie à diamètre réduit à son extrémité disposée en face du trou renfermant le moyen de blocage lorsque la tige est dans une première position ou position hors service, le blocage de la vis étant réalisé par déplacement de la tige dans une seconde position ou position de blocage dans laquelle cette tige déplace le moyen de blocage radialement et vers l'extérieur, dispositif de fixation d'une très grande sûreté et facile à mettre en place sur le cloisonnement d'un réacteur nucléaire ayant fonctionné.

Dans ce but :
- le moyen de blocage est constitué par au moins une bille d'un diamètre sensiblement égal à l'épaisseur de la paroi tubulaire de la vis dans sa partie filetée de telle sorte que cette bille de blocage vienne déformer par compression au moins un filet du trou taraudé lorsque la tige vient en position de service à l'intérieur de la vis introduite et vissée dans le trou taraudé,

et que la vis comporte en outre des parties déformables au voisinage de la tête de la tige dans sa position de service pour le sertissage de cette tige en position de blocage sur la vis.

Afin de bien faire comprendre l'invention, on va maintenant décrire à titre d'exemple non limitatif, un mode de réalisation d'un dispositif de fixation suivant l'invention appliqué au cas d'une cloison du coeur d'un reacteur nucléaire à eau sous pression.

La figure 1 est une vue en coupe du dispositif de fixation au moment de son introduction dans le trou usiné dans les cloisons.

La figure 2 est une vue en coupe du dispositif de fixation vissé à l'intérieur du trou taraudé des cloisons mais non bloqué.

La figure 3 est une vue en coupe du dispositif de fixation dans sa position vissée et bloquée à l'intérieur du trou taraudé ménagé dans les cloisons.

La figure 3a est une vue en coupe suivant AA de la figure 3.

La figure 4 est une vue en coupe montrant les différentes positions d'un outil de vissage et de sertissage à l'intérieur de la tête d'une vis telle que représentée aux figures 1, 2 et 3, pendant le blocage du dispositif de fixation.

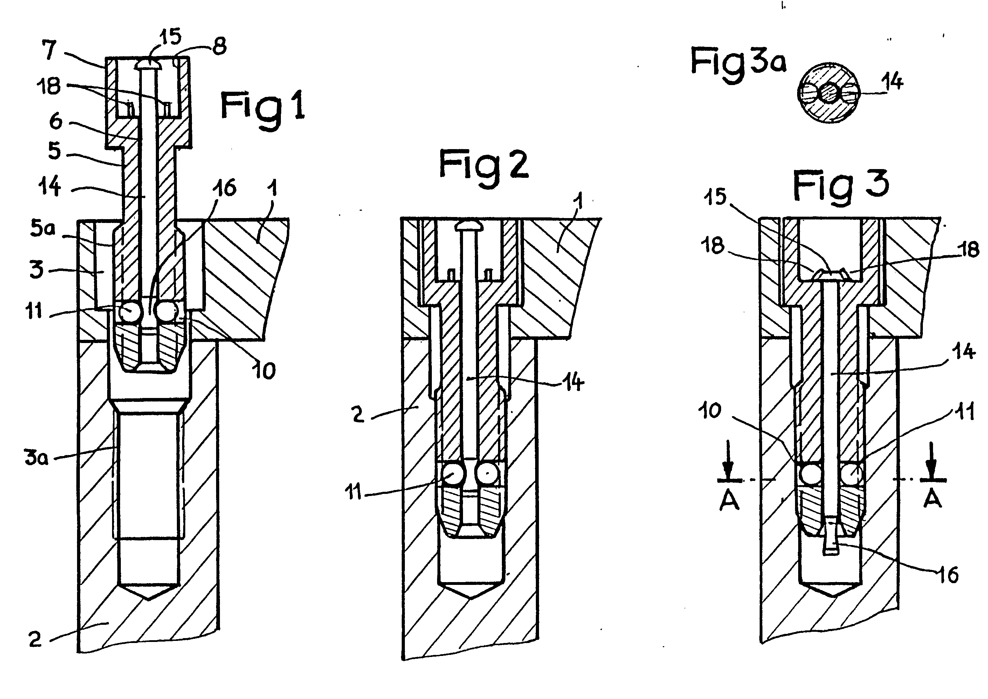

Sur la figure 1, on voit les cloisons 1 et 2 assemblées dans lesquelles est usiné un trou 3 taraudé sur une partie 3a de sa longueur à l'intérieur de la cloison 2. A l'intérieur de la cloison 1, le trou comporte un élargissement terminé par un épaulement destiné à recevoir la tête de vis. La vis 5 comporte une partie filetée 5a correspondant à la partie taraudge 3a du trou à l'intérieur de la cloison 2. La vis 5 est percée d'un alésage axial 6 sur toute sa longueur et comporte une tête 7 à grand diamètre. La tête 7 comporte une ouverture 8 de forme prismatique à section hexagonale pour l'engagement d'un outil de vissage.

Deux trous de direction radiale 10 communiquent avec l'alésage central 6 de la vis à l'une de leurs extrémités et débouchent à leur autre extrémité sur la surface latérale externe filetée 5a de la vis. A l'intérieur de chacun des trous 10 est disposée une bille 11, dont le diamètre, ainsi qu'il est visible sur la figure 3a est sensiblement égal à l'épaisseur maximum de la paroi tubulaire de la vis dans sa partie filetée 5a.

Les bords des trous 10, à l'endroit où ces trous débouchent sur la surface latérale externe de la vis, sont légèrement rabattus vers l'intérieur pour retenir les billes 11 à l'intérieur des trous 10 correspondant.

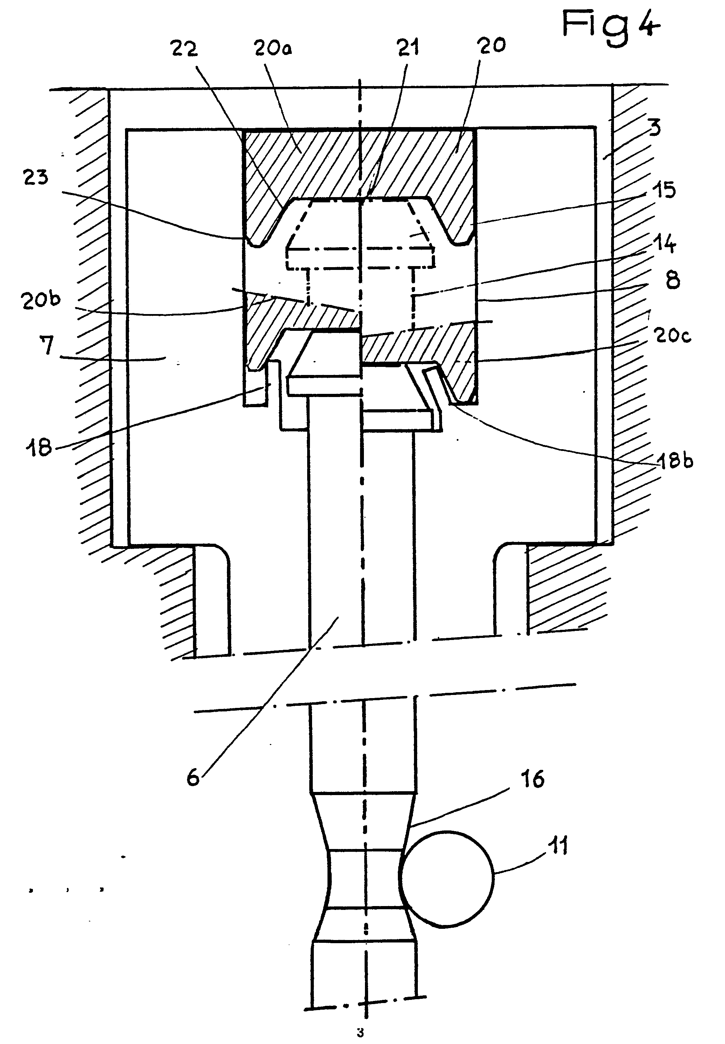

A l'intérieur de l'algsage 6 de la vis est disposée une tige 14 engagée dans cet alésage pratiquement sans jeu. La tige 14 comporte une tête 15 dont le diamètre est sensiblement supérieur au diamètre de l'alésage 6 et une partie à diamètre réduit 16 visible sur la partie inférieure de la figure 4 à plus grande échelle, à son extrémité opposée à la tête 15.

La partie à diamètre réduit 16 est reliée à la partie à diamètre non réduit de la tige par une surface tronconique. La partie à diamètre réduit a une forme torique permettant sa mise en contact avec les billes 11, lorsque la tige 14 est dans sa position représentée à la figure 1 ou dans la partie inférieur de la figure 4. Dans cette position hors service de la tige, les billes peuvent venir en position de retrait dans la direction radiale pendant le vissage de la vis 5 qui provoque le déplacement vers l'intérieur des billes 11 repoussées par les filets de la partie taraudée 3a du trou 3. A l'intérieur de l'ouverture 8 de la tête de vis 7, est prévue une collerette 18 usinée dans le métal de la vis et facilement déformable.

La vis est mise en place et vissée à l'intérieur du trou taraudé 3 par un outil dont le profil externe correspond au profil de l'ouverture 8 de la tête de vis.

En fin de vissage, la vis est dans sa position représentée sur la figure 2 où elle assure la fermeture de l'interstice entre les cloisons 1 et 2.

On réalise alors le blocage de la vis tel qu'il est représenté aux figures 3 et 3a en utilisant l'outil de vissage et de sertissage 20 représenté sur la figure 4. Cet outil de sertisaage 20 est conçu de façon à pouvoir être adapté sur un dispositif tel que décrit dans la demande de brevet français N°81-14899 du 30 Juillet 1981. Comme indiqué, cet outil comporte une surface externe prismatique d'une forme correspondant à la forme de l'ouverture 8 de la tête vis 7. Sa partie inférieure comporte une surface d'appui plane 21, une portée tronconique 22 et un chanfrein 23 permettant de faciliter son introduction dans l'ouverture 8 de la tête de vis 7.

En fin de vissage, la vis étant dans sa position représentée à la figure 2, on exerce une poussée axiale sur l'outil 20 grâce au dispositif décrit dans le brevet N°81-14899, de sorte que la surface d'appui 21 vienne en contact avec la tête 15 de la tige de manoeuvre 14 et que cette tige soit poussée vers le fond du trou taraudé 3. Le mouvement de pénétration de la tige de manoeuvre amène une partie à diamètre non réduit de la tige en face des billes 11, si bien que celles-ci sont déplacées radialement vers l'extérieur comme représenté à la figure 3.

Au cours de leur déplacement sous l'effort de poussée exercé sur la tige, la pression sur les billes est exercée par la rampe tronconique située à l'extrémité de la zône à diamètre réduit. L'avancée radiale des billes vers l'extérieur produit un écrasement des filets de la partie taraudée 3a du trou 3, ce qui provoque un blocage en rotation et en translation de la vis.

L'outil 20 est alors passé de la position 20a à la position 20b représentée sur la figure 4. Dans sa position 20b, l'outil vient en contact par sa partie tronconique 22 avec les parties déformables 18 de la tête de vis 7. In poursuivant le mouvement de l'outil 20 jusqu'au moment où la tête 15 de la tige de manoeuvre 14 vient en contact avec le fond de l'ouverture 8 de la tête de vis, on provoque le rabattement des parties déformables 18 jusqu'à les amener dans une position repliée 18b où elles maintiennent la tête 15 de la tige de manoeuvre contre le fond de l'ouverture de la tête de vis. Le dispositif de fixation est alors dans sa position de blocage représentée à la figure 3.

Dans cette position la vis est non seulement bloquée en rotation et en translation mais également fixée par rapport aux cloisons 1 et 2 de façon tout à fait sûre même en cas de rupture de la vis, puisque la tige 14 continue à maintenir la vis et évite qu'elle ne devienne un corps migrant dans l'eau de refroidissement du réacteur.

Le blocage de la vis a été obtenu sans déformation de cette vis mais simplement en écrasant le filetage du trou taraudé dans l'une des cloisons sur un très petite surface correspondant à la surface de contact avec la bille. Les billes sont maintenues en position de blocage par la tige qui est elle-même sertie sur la vis.

Les opérations de mise en place et de blocage de la vis sont réalisées par simple vissage et par simple poussée sur une tige. Ces opérations peuvent être facilement réalisées avec l'outillage décrit dans la demande de brevet N°81-14899 du 30 Juillet 1981. En particulier, ces opérations seront réalisées sous eau depuis une position située au-dessus de la piscine du réacteur.

On doit bien comprendre que le mode de réalisation qui a été décrit n'est nullement limitatif et qu'il est possible de modifier des points de détail sans pour autant en sortir du cadre de l'invention.

C'est ainsi que les moyens de blocage de la vis peuvent être différents de pièces sphériques telles que les billes 11 qui ont été décrites, ces moyens de blocage peuvent avoir la forme de petits cylindres dont l'extrémité est arrondie ou tout autre forme convenable. La zone à diamètre réduit de la tige de manoeuvre peut avoir une forme quelconque facilitant la mise en place de la tige de manoeuvre en position de blocage.

La vis peut présenter un seul trou tel que 10 pouvant recevoir un moyen de blocage, deux trous disposés de façon opposés comme dans l'exemple de réalisation qui a été décrit, ou encore trois trous ou plus placés dans des positions angulaires régulièrement espacées autour de l'axe de la vis.

Le dispositif de fixation suivant l'invention peut-être utilisé en dehors du domaine de l'élimination des espaces de fuite du cloisonnement d'un réacteur nucléaire à eau sous pression.

## Revendications

1. Dispositif de fixation irréversible de deux cloisons (1, 2) du coeur d'un réacteur nucléaire par vis imperdable comportant
- une vis (5) engagée dans un trou (3) taraudé sur una partie (3a) de sa longueur, usiné dans l'une au moins des deux cloisons (1, 2), la vis (5) présentant sur toute sa longueur et suivant son axe un alésage (6) communiquant avec au moins un trou (10) de direction radiale débouchant sur la surface latérale externe de la vis (5) dans sa partie filatée (5a),
- et un ensemble de blocage de la vis (5) dans le trou taraudé (3) constitué par au moins un élément (11) mobile dans le trou radial (10) et une tige de manoeuvre (14) angagée pratiquement sans jeu dans l'alésage (6) comportant una tête (15) et une partie à diamètre réduit (16) à son extrémité disposée an face du trou (10) renfermant la moyen de blocage (11) lorsque la tige (14) est dans une première position ou position hors sarvice, le blocage de la vis étant réalisé par déplacement de la tige (14) dans une seconde position ou position de blocage dans laquelle cette tige (14) déplace le moyen de blocage (11) radialement et vers l'extérieur, caractérisé par la fait que le moyen de blocage est constitué par au moins una bille d'un diamètre sensiblement égal à l'épaisseur de la paroi tubulaire de la vis (5) dans sa partie filatée (5a) de telle sorte que cette bille de blocage vienne déformer par compression au moins un filet du trou taraudé (3) lorsque la tige (14) vient en position de service à l'intérieur de la vis (5) introduite et vissée dans le trou taraudé (3), et que la vis comporte en outre des parties déformables (18) au voisinage de la tête (15) de la tige (14) dans sa position de service pour le sertissage de cette tige en position de blocage sur la vis (5).

2. Dispositif de fixation suivant la revendication 1, caractérisé par le fait que la vis comporte deux trous (10) situés dans le prolongement l'un de l'autre et dans des positions diamètralement opposées contanant chacun une bille de blocage (11).

3. Dispositif de fixation suivant la revendication 1, caractérisé par le fait que la partie à diamètre réduit (16) de la tige de manoeuvre (14) a une surface extérieure de forme torique raccordée à la partie à diamètre non réduit de la tige (14) par une portée tronconique.

4. Procédé da fixation de deux cloisons du coeur d'un réacteur nucléaire par vis imperdable utilisant le dispositif da fixation suivant l'une quelconque des revendications 1 à 3, caractérisé par le fait qu'on introduit la vis (5) dans le trou taraudé (3), qu'on réalise le vissage de cette vis (5) dans le trou taraudé (3), qu'on effectue alors une poussée sur la tige da manoeuvre (14) de façon à déplacer la bille (11), dans la direction radiale et vers l'extérieur par mise en coïncidence de cette bille (11) avec la zone à diamètre non réduit de la tige de manoeuvre (14) puis qu'on effectue le rabattement des parties déformables (18) de la tête de vis (7) sur la tête (15) de la tige de manoeuvre (14), la mise en place et le blocage de la vis ayant lieu sous eau, dans la piscine du réacteur nucléaire.

**Patentansprüche**

1. Vorrichtung zur irreversiblen Befestigung zweier Zwischenwände (1, 2) eines Kernreaktors mittels nichtverlierbaren Bolzen mit:
einem Bolzen (5), der in ein Loch (3) eingeführt ist, das auf einem Teil (3a) seiner Länge mit einem Gewinde versehen ist und das in mindestens eine der beiden Zwischenwände (1, 2) gebohrt ist, wobei der Bolzen (5) auf seiner gesamten Länge längs seiner Achse eine Öffnung (6) aufweist, die mit mindestens einem Loch (10) in Radialrichtung verbunden ist, das auf der äußeren Mantelfläche des Bolzens (5) in dessen mit einem Gewinde versehenen Bereich (5a) austritt und
- eine Anordnung zum Blockieren des Bolzens (5) in dem Gewindeloch (3), das aus mindestens einem Element (11) besteht, das in dem radialen Loch (10) beweglich ist und aus einer Manövrierstange (14), die praktisch ohne Spiel in der Öffnung (6) angeordnet ist, einen Kopf (15) und einen Bereich mit reduziertem Durchmesser an seinem Ende, das dem Loch (10) gegenüberliegt aufweist, das das Blockierorgan (11) umschließt, während die Stange (14) sich in einer ersten Stellung oder Ruhestellung befindet und das Blockieren des Bolzens durch Verschieben der Stange (14) in eine zweite Lager- oder Blockierlage bewirkt wird, in der diese Stange (14) das Blockierorgan (11) radial nach außen verschiebt,
dadurch gekennzeichnet, daß das Blockierorgan (11) aus mindestens einer Kugel mit einem Durchmesser besteht, der im wesentlichen gleich der Dicke der Rohrwandung des Bolzens (5) in dessen mit einem Gewinde (5a) versehenen Teil ist, derart, daß diese Blockierkugel durch den Andruck mindestens eines Gewindeganges des Gewindeloches (3) verformt wird, wenn die Stange (14) im Inneren des in das Gewindeloch (3) eingefügten und verschraubten Bolzens (5) in Betriebsstellung geht, und dadurch, daß der Bolzen außer den in der Nähe des Kopfes (15) der Stange (14) deformierbare Bereich (18) zum Klemmen dieser Stange in einer Blockierstellung auf dem Bolzen (5) aufweist.

2. Befestigungsvorrichtung nach Anspruch 1, dadurch gekennzeichnet, daß der Bolzen zwei Löcher (10) aufweist, die jeweils in ihren jeweiligen Verlängerungen angeordnet sind und in Lagen, die sich diametral gegenüberliegen, wobei jedes Loch eine Blockierkugel (11) aufweist.

3. Befestigungsvorrichtung nach Anspruch 1, dadurch gekennzeichnet, daß der Bereich mit reduziertem Durchmesser (16) der Handhabungsstange (14) eine äußere Oberfläche mit torischer Form aufweist, die an einen Bereich der Stange (14) mit nichtreduziertem Durchmesser über einen kegelstumpfförmigen Absatz verbunden ist.

4. Verfahren zum Befestigen zweier Zwischenwände eines Kernreaktors mittels eines nichtverlierbaren Bolzens unter Verwendung der Befestigungsvorrichtung nach einem der Ansprüche 1 bis 3,
dadurch gekennzeichnet, daß der Bolzen (5) in das Gewindeloch (3) eingefügt wird, daß der Bolzen (5) in das Gewindeloch (3) geschraubt wird, daß anschließend ein Druck auf die Handhabungsstange (14) ausgeübt wird, derart, daß die Kugel (11) in Radialrichtung nach außen hin verschoben wird, wobei diese Kugel (11) mit dem Bereich nichtverjüngten Durchmessers der Handhabungsstange (14) in Coinzidenz gebracht wird und anschliessend ein Umklappen der verformbaren Bereiche (18) des Schraubenkopfes (7) auf den Kopf (15) der Handhabungsstange (14) erfolgt, wobei das Anbringen und Blockieren des Bolzens unter Wasser in dem Reaktorbecken erfolgt.

**Claims**

A device for irreversibly fixing two partitions (12) of the core of a nuclear reactor by a captive screw, comprising:
- a screw (5) engaging in a hole (3) machined at least one of the two partitions (1, 2) and tapped over a portion (3a) of its length, the screw (5) being formed throughout its axial length with a bore (6) communicating with at least one radially directed hole (10) opening on to the outer lateral surface of the screw (5) in its screwthreaded portion (5a).
- and an assembly for locking the screw (5) in the tapped hole (3) formed by at least one element (11) movable in the radial hole (10) and a manoeuvring rod (4) engaging substantially without clearance in the bore (6) and having a head (15) and a portion of reduced diameter (16) at its end facing the hole (11) containing the locking means (11) when the rod (14) is in a first, inoperative position, the screw being locked by the displacement of the rod (14) into a second locking position in which the rod (14) diplaces the locking meams (11) radially outwards,
characterised in that the locking means (11) is formed by at least one ball of diameter substantially equal to the the thickness ot the tubular wall of the screw (15) in its screwthreaded portion (5a), so that the locking ball deforms by compression at least one thread .ot the tapped hole (3) when the rod (14) moves into the operating position inside the screw (5) introduced and screwed into the tapped hole (3), the screw also comprising deformable portions (18) adjacent the head (15) of the rod (14) in its

**0 148 039**

operating postition for crimping the rod in the locking position on the screw (5).

2. A fixing device according to claim 1, characterised in that the screw comprises two holes (10) disposed in prolongation of one another and in diametrically opposite positions each hole contanining a locking ball (11).

3. A fixing device according to claim 1, characterised in that the portion of reduced diameter (16) of the manoeuvring rod (14) has an outer surface of toric shape connected to the portion of the rod (14) of unreduced diameter via a frustoconical bearing.

4. A method of fixing two partiotions of the core of a nuclear reactor by a captive screw, using the fixing device according to any of claims 1 to 3, characterised in that the screw (5) is introduced into the tapped hole (3), the screw (5) is screwed into the tapped hole (3), then a thrust is exerted on the manoeuvring rod (14) so as to displace the ball (11) radially and outwardly by bringing such ball (11) into registration with the zone of the manoeuvring rod (14) ot unreduced diameter, whereafter the deformable portions (18) of the screw head (7) are bent down over the head (15) of the manoeuvring rod (14), the screw being positioned and locked under water in the pool of the nuclear reactor.

Fig 1

Fig 2

Fig 3a

Fig 3

0 148 039

0 148 039

Fig 4